# EUROPEAN PATENT APPLICATION

(11) **EP 4 242 107 A1**
(43) Date of publication of application: **13.09.2023**
(21) Application number: 23160539.5
(22) Date of filing: 07.03.2023
(51) Int. Cl.: B64D 13/06, B60H 1/32

(54) **COOLING SYSTEM FOR VEHICLE**

(30) Priority: 10.03.2022 US 202263318512 P
(71) Applicant: Hamilton Sundstrand Corporation, Charlotte, NC 28217-4578 (US)
(72) Inventor: VIGNALI, Mark G., Simsbury, CT, 06070 (US)
(74) Representative: Dehns

(57) **Abstract**

A cooling system (20) for a vehicle includes an inlet (21) configured to receive a medium and a compression device (22) including a shaft (28), a compressor (24) connected to the shaft (28) and having a compressor outlet (36), an electric motor (30) connected to the shaft (28) and configured to drive the compressor (24), and a turbine (26) connected to the shaft (28) and also configured to drive the compressor (24) upon receipt of a compressed medium (to create an expanded medium). The turbine (26) includes a turbine inlet (42) and a turbine outlet (60). A load heat exchanger (62) is connected to the turbine outlet (60) and receives expanded medium therefrom. The load heat exchanger (62) has a load heat exchanger outlet. At least one cooling heat exchanger (32, 34) has a heated flow inlet (38) connected to the compressor outlet (36), a heated flow outlet (48) connected to the turbine inlet (42), and a cooling flow inlet that receives a cooling medium from the load heat exchanger outlet.

## Description

### BACKGROUND

Exemplary embodiments pertain to the art of thermal management of and, in particular, to thermal management

A typical commercial aircraft includes at least several nonintegrated cooling systems configured to provide temperature control to various regions of the aircraft. For example, an aircraft environmental control system primarily provides heating and cooling for the aircraft cabin area. In addition, a galley chiller system is dedicated to refrigerating the food carts in the galleys located throughout the aircraft. Since each system has a significant weight and power requirement, the overall efficiency of the aircraft is affected by these nonintegrated systems.

One of the more of these cooling systems may rely on ram or fresh air to condition, i.e., to cool or heat another medium. However, in applications where the aircraft is travelling at supersonic speeds, the temperature of the ram air may be too high to effectively remove heat from another load.

### BRIEF DESCRIPTION

According to an embodiment, a cooling system for a vehicle includes an inlet configured to receive a medium and a compression device including a shaft, a compressor connected to the shaft and having a compressor outlet, an electric motor connected to the shaft and configured to drive the compressor, and a turbine connected to the shaft and also configured to drive the compressor upon receipt of a compressed medium (to create an expanded medium). The turbine includes a turbine inlet and a turbine outlet. A load heat exchanger is connected to the turbine outlet and receives expanded medium therefrom. The load heat exchanger has a load heat exchanger outlet. At least one cooling heat exchanger has a heated flow inlet connected to the compressor outlet, a heated flow outlet connected to the turbine inlet, and a cooling flow inlet that receives a cooling medium from the load heat exchanger outlet.

In addition to one or more of the features described herein, or as an alternative, in further embodiments the at least one cooling heat exchanger further comprises a first cooling heat exchanger and a second cooling heat exchanger arranged in series relative to the compressed medium.

In addition to one or more of the features described herein, or as an alternative, in further embodiments the first cooling heat exchanger and the second cooling heat exchanger are formed as a single unit.

In addition to one or more of the features described herein, or as an alternative, in further embodiments the heated flow inlet connected to the compressor outlet is formed in the first cooling heat exchanger and the heated flow outlet connected to the turbine inlet is formed at the second cooling heat exchanger.

In addition to one or more of the features described herein, or as an alternative, in further embodiments the first cooling heat exchanger further comprises another heated flow outlet and the second cooling heat exchanger further comprises another heated flow inlet, the another heated flow outlet being directly connected to the another heated flow inlet.

In addition to one or more of the features described herein, or as an alternative, in further embodiments the cooling flow inlet is formed in the second cooling heat exchanger.

In addition to one or more of the features described herein, or as an alternative, in further embodiments another cooling flow inlet is formed in the first cooling heat exchanger, the another cooling flow inlet receives another cooling medium from the inlet.

In addition to one or more of the features described herein, or as an alternative, in further embodiments the cooling medium at an outlet of the at least one cooling heat exchanger is exhausted overboard.

In addition to one or more of the features described herein, or as an alternative, in further embodiments comprising a bypass conduit connecting the compressor outlet and the turbine inlet and a valve associated with the bypass conduit.

In addition to one or more of the features described herein, or as an alternative, in further embodiments the medium is ram air.

In addition to one or more of the features described herein, or as an alternative, in further embodiments a load is cooled by the expanded within the load heat exchanger, the load including an environmental control system.

In addition to one or more of the features described herein, or as an alternative, in further embodiments a load is cooled by the expanded medium within the load heat exchanger, the load including a liquid cooling loop.

In addition to one or more of the features described herein, or as an alternative, in further embodiments the vehicle is an aircraft.

In addition to one or more of the features described herein, or as an alternative, in further embodiments the vehicle is a land vehicle.

According to an embodiment, a method of conditioning a load of a vehicle includes compressing a medium within a compressor to create a compressed medium that is output at a compressor outlet, cooling the compressed medium within a cooling heat exchanger connected to the compressor outlet via a cooling medium, expanding the compressed medium output from the compressor within a turbine after cooling to create an expanded medium, and providing the expanded medium output from the turbine to a load heat exchanger. The expanded medium output from the turbine is provided to the cooling heat exchanger as the cooling medium after passing through the load heat exchanger.

In addition to one or more of the features described herein, or as an alternative, in further embodiments cooling the compressed medium output from the compressor within another cooling heat exchanger, via another cooling medium.

In addition to one or more of the features described herein, or as an alternative, in further embodiments the another cooling heat exchanger is arranged upstream from the cooling heat exchanger relative to a flow of the compressed medium.

In addition to one or more of the features described herein, or as an alternative, in further embodiments comprising receiving a flow of the medium at an inlet, wherein a portion of the medium at the inlet is provided to the another cooling heat exchanger as the another cooling medium.

In addition to one or more of the features described herein, or as an alternative, in further embodiments exhausting the cooling medium from the cooling heat exchanger overboard.

In addition to one or more of the features described herein, or as an alternative, in further embodiments in a first mode, the compressor is driven in response to expanding the compressed medium output from the compressor within the turbine, and in a second mode, the compressor is driven by an electric motor and in response to expanding the compressed medium output from the compressor within the turbine.

### BRIEF DESCRIPTION OF THE DRAWINGS

The following descriptions should not be considered limiting in any way. With reference to the accompanying drawings, like elements are numbered alike:
FIG. 1 is a schematic diagram of a cooling system of a vehicle according to an embodiment;
FIG. 2 is a schematic diagram of a cooling system of a vehicle according to another embodiment; and
FIG. 3 is a schematic diagram of yet another cooling system of a vehicle according to an embodiment.

### DETAILED DESCRIPTION

A detailed description of one or more embodiments of the disclosed apparatus and method are presented herein by way of exemplification and not limitation with reference to the Figures.

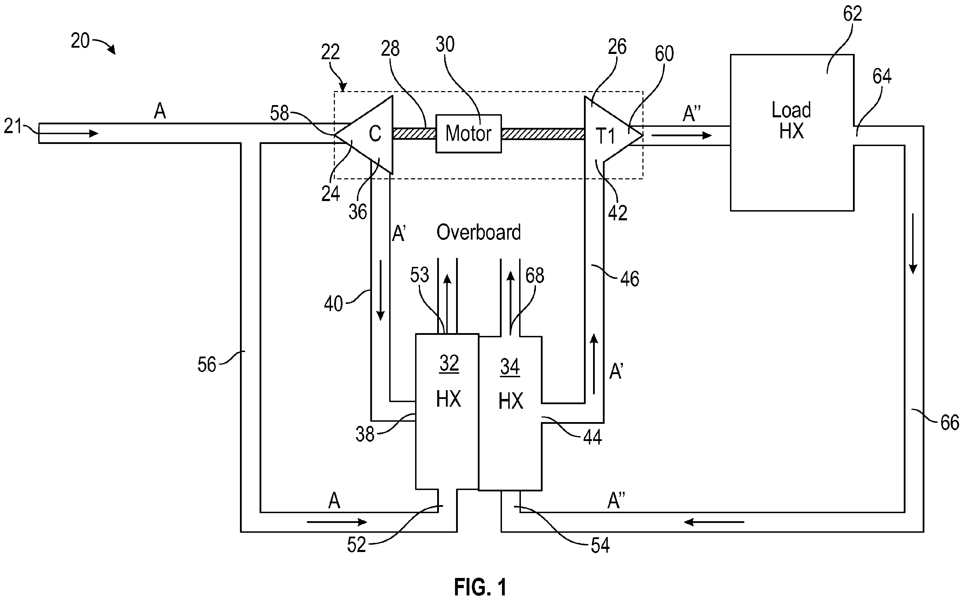

With reference now to FIGS. 1-3, various embodiments of a cooling system 20 are illustrated. As will be described in more detail below, the cooling system 20 is configured to remove heat from another load of the vehicle. Although the cooling system 20 will be described herein with reference to an aerial vehicle, such as a fixed wing or rotary wing aircraft for example, it should be understood that the cooling system is also suitable for use in land vehicles, such as motor vehicles for example.

As shown, the cooling system 20 is configured to receive a medium A at an inlet 21. In the illustrated, non-limiting embodiment, the medium is fresh air, such as outside air for example. This outside air, also referred to herein as RAM air, can be procured via one or more scooping mechanisms, such as an impact scoop or a flush scoop for example. When the cooling system 20 is implemented on an aircraft, the medium A is generally at an ambient pressure equal to an air pressure outside of the aircraft when the aircraft is on the ground and is between an ambient pressure and a cabin pressure when the aircraft is in flight. It should be understood that any suitable medium A is within the scope of the disclosure. For example, other suitable mediums A available on an aircraft include, but are not limited to bleed air, which is pressurized air originating from, i.e. being "bled" from, an engine or auxiliary power unit of the aircraft, or cabin discharge or, which is air leaving the cabin and that would typically be discharged overboard.

It should be understood that the elements of the cooling system 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the cooling system 20 can be regulated to a desired value.

In each of the embodiments illustrated in FIGS. 1-3, the cooling system 20 includes a compression device 22. A compression device 22 is a mechanical device that includes components for performing thermodynamic work on a medium (e.g., extracts work from or applies work to the medium A by raising and/or lowering a pressure and by raising and/or lowering a temperature). Examples of a compression device 22 include an air cycle machine, a two-wheel air cycle machine, a three-wheel air cycle machine, a four-wheel air cycle machine, etc.

In the illustrated, non-limiting embodiment, the compression device 22 includes a compressor 24 and a turbine 26 operably coupled by a shaft 28. A compressor 24 is a mechanical device configured to raise a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. A turbine is a mechanical device that expands a medium and extracts work therefrom (also referred to as extracting energy) to drive the compressor 24 via the shaft 28. Although only a two-wheel compression device 22 is illustrated and described herein, it should be understood that embodiments having additional wheels, such as an additional compressor, turbine, and/or fan for example, are also within the scope of the disclosure.

In an embodiment, the compression device 22 includes an electric motor 30 connected to the shaft 28 and operable to drive the compressor 24. The motor 30 can receive power from a power source (not shown) such as generator or a power bus (e.g., a power bus of an aircraft). In embodiments including both a turbine and a motor connected to the shaft, any or all of the turbine and the motor may be used to drive the compressor 24. It should also be understood that embodiments including a compression device 22 that has a compressor 24 that is solely driven by a motor 30, such as a compression device 22 that is absent a turbine for example, are also contemplated herein.

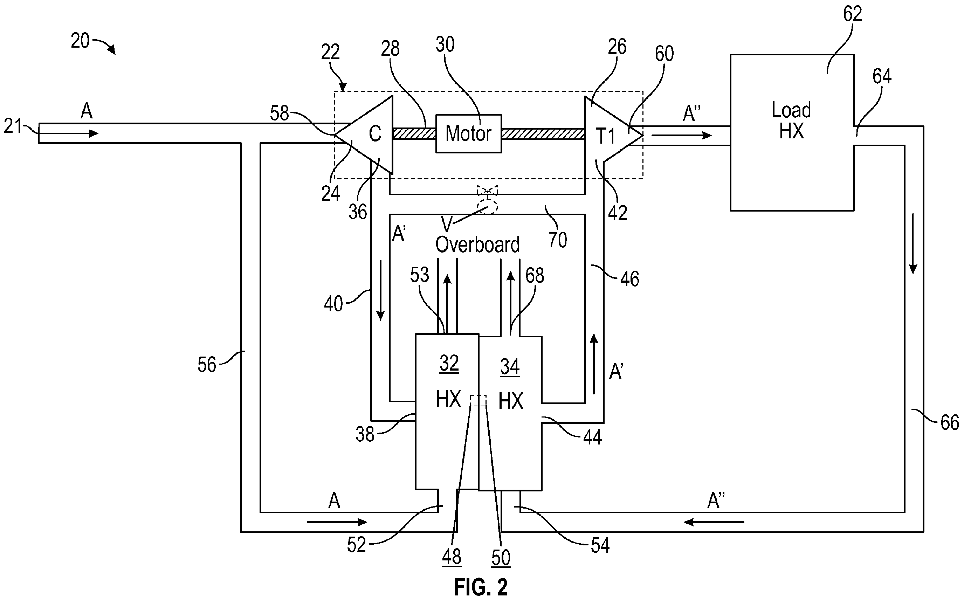

The cooling system additionally includes at least one cooling heat exchanger arranged between the compressor 24 and the turbine 26 relative to a flow through the cooling system 20. In the non-limiting embodiment of FIGS. 1 and 2, the at least one heat exchanger includes a first cooling heat exchanger 32 and a second cooling heat exchanger 34 (also referred to herein as an outflow or regeneration heat exchanger). These cooling heat exchangers 32, 34 are shown as co-located in the FIGS., but this is not required. In one embodiment, the cooling heat exchangers 32, 34 are contained in a single unit.

As shown, an outlet 36 of the compressor 24 is connected to a first or heated flow inlet 38 of the first cooling heat exchanger 32 via a conduit 40 and an inlet 42 of the turbine 26 is connected to an outlet 44 of the second cooling heat exchanger 34 via conduit 46. The skilled artisan will realize that the first cooling heat exchanger 32 (as well as second cooling heat exchanger 34) can be any type of heat exchanger that achieves the desired result of cooling the compressed medium A'. For example, the cooling heat exchangers 32, 34 can be cross-flow heat exchangers.

For simplicity, in FIG. 1, the connection that provides the transfer of the compressed medium A' from the first cooling heat exchanger 32 to the second heat exchanger 34 is not shown. As such, the unit comprising the first heat exchanger 32 and the second cooling heat exchanger 34 includes a compressed medium inlet 38 at the first cooling heat exchanger 32 and compressed medium outlet 44 that is part of second cooling heat exchanger 34.

The embodiment of the cooling system 20 illustrated in FIG. 2, however, includes a heated flow outlet 48 of the first cooling heat exchanger 32 that provides air directly (or indirectly) to a heated flow outlet inlet 50 of the second cooling heat exchanger 34. It shall be understood that the input/output 48/50 need not be a physical object and can be formed such that the path from the heated flow inlet 38 to the outlet 44 is a continuous path.

A respective cooling medium is provided to a cooling flow inlet of each of the first cooling heat exchanger 32 and the second cooling heat exchanger 34. For example, the compressed medium A' is cooled within the first heat exchanger by a first cooling medium provided at cooling flow inlet 52. Similarly, the compressed medium A' is cooled within the second cooling heat exchanger 34 by a second cooling medium provided at cooling flow inlet 54. Although the first and second cooling mediums are illustrated and described herein as being exhausted overboard to the ambient atmosphere surrounding the vehicle, it should be understood that in other embodiments, the cooling mediums may be provided to another load of the vehicle.

In the illustrated, non-limiting embodiment, the first cooling medium is the medium A provided at the inlet 21. It shall be understood that compressed medium A' output from the compressor 24 is at a significantly higher pressure and temperature as compared to the medium A at the inlet 21. As such, the medium A can be used to cool the compressed medium A' in the first cooling heat exchanger 32. To that end, a bypass conduit 56 is connected between the inlet 21 and the cooling flow inlet 52 of the first cooling heat exchanger 32. The bypass conduit 56 may be provided directly at the inlet 21, or alternatively, at a location downstream therefrom, such as between the inlet 21 and an inlet 58 of the compressor 24. The second cooling medium is a flow of the compressed medium A" downstream from an outlet 60 of the turbine 26, to be described in more detail below.

During operation of the cooling system 20 in a first mode when the vehicle is at a high altitude, such as during a cruise condition for example, a first portion of the medium A provided at the inlet 21 is provided generally directly to the inlet 58 of the compressor 24. The act of compressing the medium A, heats the medium A and increases the pressure of the medium A. The compressed medium output from the outlet of the compressor 24, represented as A', may then flow to the heated flow inlet 38 of the first cooling heat exchanger 32. At the same time, a second portion of the flow of medium A from the inlet 21 is provided to the cooling flow inlet 52 of the first cooling heat exchanger 32. Within the first cooling heat exchanger 32, heat from the compressed medium A' is transferred to the first cooling medium, medium A, before the first cooling medium is exhausted overboard via outlet 53, into the ambient atmosphere adjacent to the vehicle. As previously described, the compressed medium A' is configured to flow through the first cooling heat exchanger 32 and the second cooling heat exchanger 34 in series. Within the second cooling heat exchanger 34, heat from the partially cooled compressed medium A' is transferred to the second cooling medium, such as expanded medium A", before the medium A" is also exhausted overboard.

From the outlet 44 of the second cooling heat exchanger 34, the cooled compressed medium A' is provided to the inlet 42 of the turbine 26. Within the turbine 26, the compressed medium A' is expanded and work is extracted therefrom. The work extracted from the compressed medium A' within the turbine 26 is used to drive the compressor 24.

The expanded medium A" output from the turbine 26 has a reduced temperature and pressure relative to the compressed medium A' provided to the inlet 42 of the turbine 26. Located downstream from and in fluid communication with the outlet 60 of the turbine 26 is a load heat exchanger 62. Within the load heat exchanger 62, the expanded medium A" output from the outlet 60 of the turbine 26 is arranged in a heat exchange relationship with a load of the vehicle. In the illustrated, non-limiting embodiment, the load is separate from the cooling system 20. The load may be part of an environmental control system of the aircraft. For example, the expanded medium A" may be used to cool a flow of air within the environmental control system, such as the flow of air to be provided to the cabin for example. In another embodiment, the load is another liquid cooling loop of the vehicle. It should be understood that any suitable load of the vehicle that requires conditioning is contemplated herein.

The outlet 64 of the load heat exchanger 62 is connected to the cooling flow inlet 54 of the second heat exchanger 34 via a conduit 66. Accordingly, the cool expanded medium A" is provided from the load heat exchanger 62 to the cooling flow inlet 54 of the second cooling heat exchanger 34 as the second cooling medium. Within the second cooling heat exchanger 34, the second cooling medium A" removes heat from the compressed medium A' and is then dumped overboard via a cooling flow outlet 68.

Operation of the cooling system of FIGS. 1 and 2, is substantially similar when the aircraft is in a second mode, such as on the ground. However, in such embodiments, the motor 30 is used in combination with the work extracted from the compressed medium A' within the turbine 26 to drive the compressor 24. Although the motor 30 is described herein as being used to drive the compressor 24 when the aircraft is on the ground, it should be understood that in some embodiments, the motor may be used to drive the compressor 24 when the aircraft is in flight. Whether or not the motor is required to supplement the energy extracted by the turbine to drive the compressor 24 will depend on the pressure of the medium A provided to the system 20.

The cooling system 20 of FIGS. 1 and 2 is particularly beneficial in applications where the medium A provided at the inlet 21 of the cooling system 20 is hot and would be insufficient to provide cooling to a load without conditioning the medium A, such as during supersonic flight for example. In an embodiment, the medium A provided to the inlet 21 of the cooling system 20 is about 200°F and/or is greater than 200°F.

Further, with continued reference to FIG. 2, in an embodiment, the cooling system 20 may also be adapted to selectively deliver heat to a load within the load heat exchanger 62, rather than cool the load. As shown, a bypass conduit 70 may fluidly connect the outlet of the compressor 24 and the inlet 42 of the turbine 26. A valve V arranged within or operably coupled to the bypass conduit 70 is operable to selectively deliver the flow of compressed medium A' output from the compressor 24 directly to the inlet 42 of the turbine 26, thereby bypassing the first cooling heat exchanger 32 and the second cooling heat exchanger 34. Accordingly, the temperature of the compressed medium A' provided to the turbine 26, and the temperature of the expanded medium A" output from the turbine 26 (and therefore provided to the load heat exchanger 62) is warmer than in embodiments where the compressed medium A' is cooled within the first and second cooling heat exchangers 32, 34.

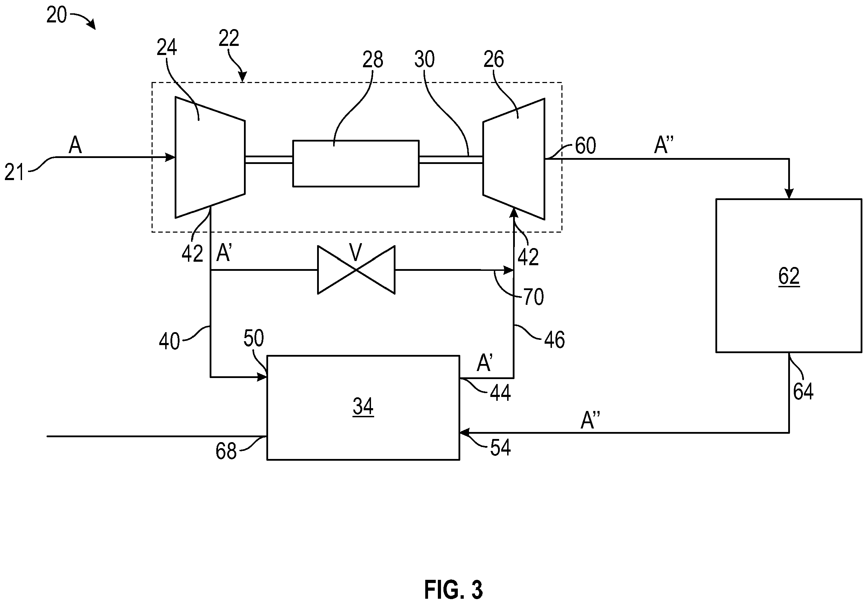

With reference now to FIG. 3, the cooling system 20 is similar to the cooling system of FIGS. 1 and 2. As noted previously, the compression device 22 may be identical to the compression device 22 previously described herein. However, in the non-limiting embodiment of FIG. 3, the at least one heat exchanger positioned between the compressor 24 and the turbine 26 relative to a flow of a medium includes a single cooling heat exchanger, such as an outflow or regenerative cooling heat exchanger 34. As shown, the outlet 36 of the compressor 24 is connected to the heated flow inlet 50 of the cooling heat exchanger 34 via the conduit 40 and an inlet 42 of the turbine 26 is connected to an outlet 44 of the cooling heat exchanger 34 via conduit 46. In the illustrated, non-limiting embodiment, the heat exchanger 34 is configured to receive a cooling medium, such as the expanded medium A" output from the upstream load heat exchanger 62, at a cooling flow inlet 54. Within the regenerative cooling heat exchanger 34, heat transfers from the compressed medium A' to the expanded medium A", thereby cooling the compressed medium A' upstream from the turbine 26. The heated expanded medium A" is then exhausted overboard or provided to another load of the vehicle. Operation of the cooling system 20 is otherwise the same as the system disclosed in FIGS. 1 and 2.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A cooling system (20) for a vehicle comprising:
an inlet (21) configured to receive a medium;
a compression device (22) including:
a shaft (28);
a compressor (24) connected to the shaft, the compressor having a compressor outlet (36);
an electric motor (30) connected to the shaft and configured to drive the compressor; and
a turbine (26) connected to the shaft and also configured to drive the compressor upon receipt of a compressed medium (to create an expanded medium), the turbine including a turbine inlet (42) and a turbine outlet (60);
a load heat exchanger (62) connected to the turbine outlet and that receives the expanded medium from the turbine outlet, the load heat exchanger having a load heat exchanger outlet; and
at least one cooling heat exchanger (32, 34) having a heated flow inlet (38) connected to the compressor outlet (36) and that receives the compressed medium from the compressor, a heated flow outlet (48) connected to the turbine inlet, and a cooling flow inlet that receives a cooling medium from the load heat exchanger outlet.

2. The cooling system of claim 1, wherein the at least one cooling heat exchanger further comprises a first cooling heat exchanger (32) and a second cooling heat exchanger (34) arranged in series relative to the compressed medium.

3. The cooling system of claim 2, wherein the first cooling heat exchanger (32) and the second cooling heat exchanger (34) are formed as a single unit.

4. The cooling system of claim 3, wherein the heated flow inlet (38) connected to the compressor outlet (36) is formed in the first cooling heat exchanger (32) and the heated flow outlet (48) connected to the turbine inlet is formed at the second cooling heat exchanger (34), and preferably wherein the first cooling heat exchanger (32) further comprises another heated flow outlet and the second cooling heat exchanger (34) further comprises another heated flow inlet, the another heated flow outlet being directly connected to the another heated flow inlet.

5. The cooling system of claim 3, wherein the cooling flow inlet is formed in the second cooling heat exchanger (32), and preferably wherein another cooling flow inlet is formed in the first cooling heat exchanger, the another cooling flow inlet receives another cooling medium from the inlet.

6. The cooling system of any preceding claim, wherein the cooling medium at an outlet of the at least one cooling heat exchanger is exhausted overboard.

7. The cooling system of any preceding claim, further comprising:
a bypass conduit (56) connecting the compressor outlet and the turbine inlet; and
a valve associated with the bypass conduit (56).

8. The cooling system of any preceding claim, wherein the medium is ram air.

9. The cooling system of any preceding claim, wherein a load is cooled by the expanded medium within the load heat exchanger (62), the load including an environmental control system; or
wherein a load is cooled by the expanded medium within the load heat exchanger (62), the load including a liquid cooling loop.

10. The cooling system of any preceding claim, wherein the vehicle is an aircraft; or
wherein the vehicle is a land vehicle.

11. A method of conditioning a load of a vehicle comprising:
compressing a medium within a compressor to create a compressed medium that is output at a compressor outlet;
cooling the compressed medium within a cooling heat exchanger connected to the compressor outlet via a cooling medium;
expanding the compressed medium output from the compressor within a turbine after cooling to create an expanded medium; and
providing the expanded medium output from the turbine to a load heat exchanger;
wherein the expanded medium output from the turbine is provided to the cooling heat exchanger as the cooling medium after passing through the load heat exchanger.

12. The method of claim 11, further comprising cooling the compressed medium output from the compressor within another cooling heat exchanger, via another cooling medium.

13. The method of claim 12, wherein the another cooling heat exchanger is arranged upstream from the cooling heat exchanger relative to a flow of the compressed medium.

14. The method of claim 12 or 13, further comprising receiving a flow of the medium at an inlet, wherein a portion of the medium at the inlet is provided to the another cooling heat exchanger as the another cooling medium; and/or
further comprising exhausting the cooling medium from the cooling heat exchanger overboard.

15. The method of any of claims 12-14, wherein in a first mode, the compressor is driven in response to expanding the compressed medium output from the compressor within the turbine, and in a second mode, the compressor is driven by an electric motor and in response to expanding the compressed medium output from the compressor within the turbine.
